# EUROPEAN PATENT SPECIFICATION

(11) **EP 1 776 860 B1**
(45) Date of publication and mention of the grant of the patent: **25.01.2012**
(21) Application number: 06255390.4
(22) Date of filing: 20.10.2006
(51) Int. Cl.: A01F 15/07

(54) **Apparatus for applying a covering layer to an agricultural bale**
Vorrichtung um eine Umhüllungsschicht auf einen landwirtschaftlichen Ballen aufzubringen
Appareil pour l'application d'une couche de couverture sur une balle agricole

(30) Priority: 24.10.2005 GB 0521602
(43) Date of publication of application: 25.04.2007
(73) Proprietor: Kuhn-Geldrop B.V., 5667 KP Geldrop (NL)
(72) Inventor: Tenbult, Henrikus Theodorus Hubertus, 5531 KL Bladel (NL)
(74) Representative: Raynor, Simon Mark

(56) References cited:
- EP-A1- 0 807 380
- WO-A2-2005/009112
- DE-U1- 9 421 702
- US-A1- 2003 230 046

## Description

This invention relates to apparatus for applying a covering layer to wrap at least part of the outer surface of an agricultural bale, in which the apparatus is adapted to be mounted on a bale-forming machine to cooperate therewith.

The apparatus has a cycle of operation in which: the leading end of the covering layer is presented to the outer surface of the bale when the bale has reached a required size; the covering layer is wrapped at least once around the bale; and the supply of covering layer material from the apparatus to the bale is severed when required wrapping of the bale has been completed.

It is known to provide devices for applying binding material to the outer surface of a bale, and which enter binding material, such as netting, into the bale-forming chamber in which the compressed bale is formed. There are three main ways in which the binding material can be entered through an opening into the bale-forming chamber, to be applied to the outer surface of the compressed bale after the latter has been formed to a required size.
1. This is achieved by simply letting the binding material fall freely under gravity into a gap between pressing elements arranged around the bale-forming chamber to form the compressed bale. See for example DE 8,325,223U.
2. The loose end of the binding material may be guided by being delivered from driven "pull-off" rollers to the outer surface of the bale, with guiding plates or other guiding elements to or into the gap between the bale pressing elements. Examples of this are shown in DE 9,211,541U, DE 9,421,702U, EP 1,400,163, GB 2,163,701, and US 2003230046.
3. Use of a guiding/holding device which holds the binding material in its rest position, with the material being severed downstream of the guiding device. The guiding device is then able to bring the cut loose end of the binding material to the outer surface of the bale, to start a new cycle of operation. The binding material therefore never leaves the guiding/holding device. Examples of this are shown in US 5,855,109, and WO 2005/009112, which discloses the preamble of claim 1.

### Disadvantages Of Known Arrangements

In the case of examples 1. and 2. referred to above, the presence of dirt and dust can obstruct the movement of the loose end to be applied to the outer surface of the bale, and thereby cause malfunctioning of the binding device e.g. by the binding material rolling onto the pressing rollers. Furthermore, when the binding material is severed, there are fibres hanging freely from the end of the cut material, and due to static electricity, the fibres can easily be attracted to the feeding rollers, which can lead to winding onto the rollers instead of feeding the end to the bale chamber in a new cycle of operation. Alternatively, the loose fibres may become entangled with the severing device, preventing the subsequent movement of the binding material to the bale chamber when a new cycle of operation starts. The rollers for pulling off the binding material are actuated for as long as the binding material is being engaged with the outer surface of the bale. Any malfunctioning of the feeding can result in insufficient engagement of the binding material with the outer surface of the bale, resulting in the binding material rolling back onto the pressing rollers.

In the case of Example 3, when the binding material is urged towards the bale forming chamber, the material must be held firmly to avoid becoming loosened from the guiding device, and in the case of US 5,855,109, the surplus length of material taken when retracting the feeding device to the rest/cutting position (to ensure a tension free start of feeding in the next operating cycle) requires a lot of force/energy, and requires a firm design of the feeding device. This is because the binding material is under full tension at the moment of retraction; friction over the bars to take the surplus of the material causes small damage to the surface of the binding material, so that the maximum tension applied to the material e.g. netting may be reduced during the operating cycle, which is an inefficient use of the netting.

In order to keep a compressed bale in shape, and not let it expand subsequently, the binding material e.g. netting must be applied to the outer surface of the bale under tension. This is generated generally in two different ways:
1. By friction between the netting or supply roll of netting and the frame of the baler so that the rotation of the bale with the netting applied around its outer surface applies a tension to withdraw the netting from the supply roll;
2. By arranging for the linear speed of withdrawal of netting from the supply roll to be at a lower speed than the outer circumferential speed of the rotating bale which withdraws the binding material. This results in extension of the binding material, causing suitable tension as it is withdrawn from the supply roll, prior to being applied to the outer surface of the bale.

It is of course desirable to keep the bales well compressed using the minimum amount of outer binding or covering material, and therefore such material should be tensioned up to the possible maximum extent.

### Disadvantages Of Known Arrangements

1. The weather and the characteristics of the covering material have considerable influence on the maximum tension which can be applied to the covering material. If the pre-tension applied to the covering material is too low, the subsequently covered bale may expand too much subsequently, However, if the pre-tension is too high, the covering material may break and the covering or wrapping process must then be stopped, and a new wrapping cycle has to be started in order to wrap the bale correctly.

When the covering material is stretched to a pre-determined ratio, the pre-tension in the material will depend upon the stretch characteristics of the covering material. If the tension force is too high, the covering material may partly tear or fragment, but unless this is excessive, feeding of the covering material to the outer surface of the bale will not be interrupted, and the wrapping cycle can be continued. Although the wrapping material may be partly broken or torn, the wrapped bale can be safely ejected and processed further e.g. wrapped in stretched plastics film, and there is no loss of operating capacity for the next operating cycle.

It is therefore preferred to apply pre-tension to the withdrawn covering or wrapping material by method 2, since the pre-tension can be set to a higher level than with method 1.

According to the invention there is provided an apparatus for applying a covering material to wrap at least part of the outer surface of an agricultural bale, said apparatus being mounted on a bale-forming machine and having a cycle of operation that includes <a> a feed step in which the leading end of the covering material is presented at a feed point that corresponds in use to the outer surface of the bale when the bale has reached a required size; <b> a wrapping step in which the covering material is wrapped at least once around the bale; and <c> a severing step in which the supply of covering material from the apparatus to the bale is severed when required wrapping of the bale has been completed; in which the apparatus comprises a holder for a supply roll of covering material, such as netting; means defining a guide path for the covering material from the supply roll to the feed point; a pull-off device arranged on said guide path; a drive train coupled with the pull-off device; and a feed mouth also arranged on said guide path, downstream of the pull-off device, and operative to feed and guide the covering material to the feed point during the feed step and to hold the cut end of the covering material after the severing step; and further in which:
<A> the feed mouth is moveable between an operative feeding position near to the feed point during which <a> the covering material is first presented by the feed mouth to the feed point and <b> the covering layer is then withdrawn from the supply roll to wrap the bale; and a withdrawn position which it takes up when wrapping has been completed so that the supply of covering material to the bale can be severed; and
<B> the pull-off device and the feed mouth are relatively moveable during the operating cycle;
characterised by the apparatus being constructed and arranged such that during movement of the feedmouth from the withdrawn position to the operative feeding position, the pull-off device is driven to withdraw a predetermined length of material from the supply roll, and during the wrapping step the drive train is operative to drive the pull-off device at a speed such that the linear speed of withdrawal of the covering material from the supply roll is less than the drive speed of driving elements engageable with the bale in the bale-forming machine, thereby applying pre-tension to the covering material prior to application to the bale.

The predetermined length may be substantially equal to the distance moved by the feed mouth from the withdrawn position to the operative feeding position.

The pull-off device is preferably mounted on a fixed position on the frame of the apparatus, and preferably includes at least one roller. Conveniently, the pull-off device comprises a pair of rollers, spaced apart along the guide path.

The drive train may be arranged to be driven at a lesser speed than driving/pressing elements engageable with the bale in the bale-fordng chamber.

A braking device is preferably provided to brake the operation of the pull-off device when the feed mouth returns to its withdrawn position, in order to present loops of covering material to continue to be withdrawn from the supply roll after severing of the material.

The severing device may take the form of a spring-loaded cutter which is operative to sever the covering layer when the feed mouth has returned to its withdrawn position.

Conveniently, the feed mouth is carried by a pivotally mounted swing arm, and a gear drive also may be mounted on the swing arm and is coupled drivingly with the pull-off device so that the latter applies a withdrawal force to the covering material when the feed mouth is moved by the swing arm to the operative feeding position.

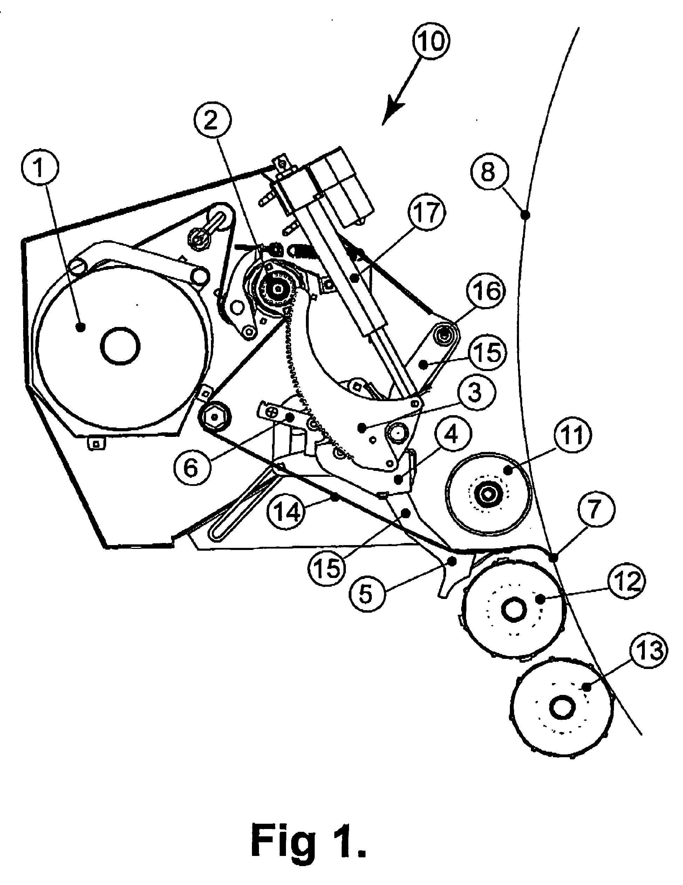

A preferred embodiment of apparatus according to the invention will now be described in detail, by way of example only, with reference to Figures 1 to 4 of the accompanying drawings, which show successive stages of an operating cycle of the apparatus, in order to apply a layer of covering material e.g. netting, to the outer surface of a compressed bale 8 (usually of cylindrical form) which is being formed in a bale-forming chamber having pressing elements arranged around the circumference of the chamber, such as rollers 11, 12 and 13.

The apparatus 10 is mounted on the bale-forming machine to cooperate therewith, and has a cycle of operation in which: the leading end 7 of a length of covering material 14 (preferably netting) is presented to the outer surface of the bale 8 when this has reached a required size. The material 14 is withdrawn from a supply roll 1 and follows a defined guide path, as shown in the drawings, before it passes through a gap between rollers 11 and 12 to engage with the cylindrical outer surface of bale 8.

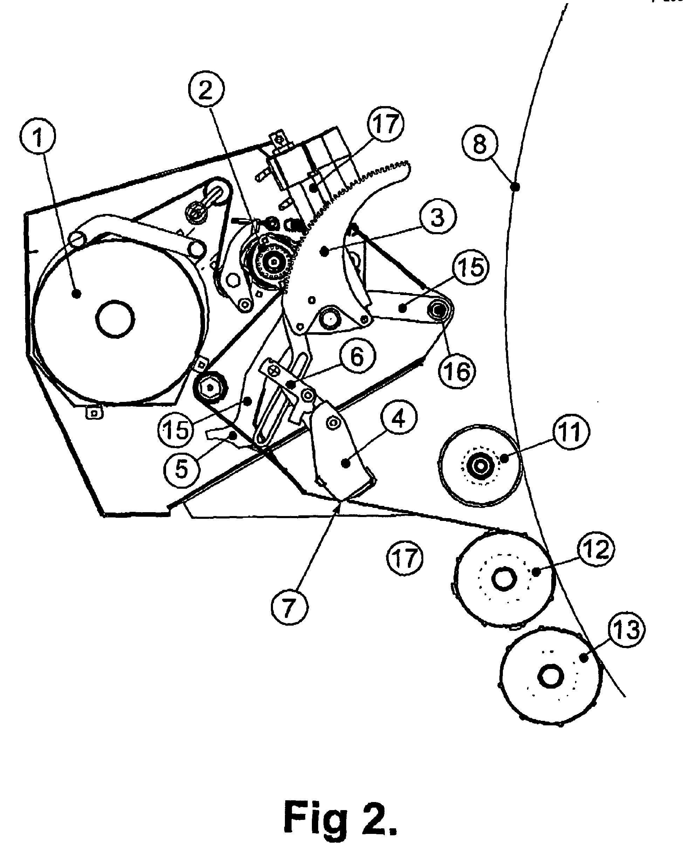

The covering or wrapping layer is wrapped at least once around the bale 8 until the required wrapping of the bale has been completed. The final stage of the operating cycle is then initiated, namely severing of the supply of material 14 from the supply roll 1 to the outer surface of the bale 8, of which the initial step is shown in Figure 2, in which a spring-loaded knife or cutter 4 is moved into engagement with the material 14.

The apparatus 10 therefore has a holder for the supply roll 1, and means defining a guide path for the material 14 issuing from the supply roll 1 to the outer surface of the bale 8. At least one pull-off device 2 is arranged along the guide path, and indeed defines part of the guide path, and in the illustrated embodiment comprises a cooperating pair of feed rollers driven at a rotational speed such that the linear speed of withdrawal of material 14 from the supply roll 1 is less than the circumferential speed of the cylindrical outer surface of the bale 8, thereby to apply pre-tension to the material 14 before it is applied as wrapping to the outer surface of the bale 8.

A feed mouth 5 is mounted on one end of a swing arm 15 pivotally mounted on pivot 16, and swing arm 15 can move the feed mouth between an operative feeding position shown in Figure 1, to a withdrawn position shown in Figures 2, 3 and 4, in which the material 14 can be severed by the cutter device 4.

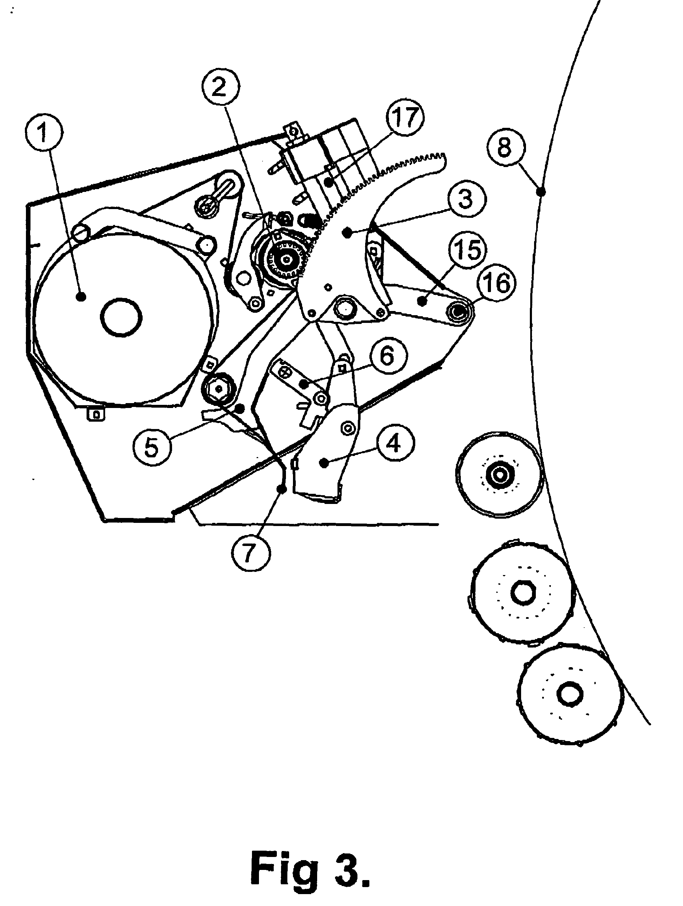

When the feed mouth 5 is in the operative feeding position shown in Figure 3, which is near to the outer surface of the bale 8, the leading end 7 of the material 4 is presented by the feed mouth 5 to the outer surface of the bale to engage therewith. The bale 8 is rotating, and carries the leading end 7 with it, which withdraws the material 14 from the supply roll 1 to apply a required number of wrappings around the cylindrical outer surface of the bale.

Any suitable drive train is coupled with the pull-off device 2, but preferably it is coupled with the drive to the rollers 11, 12 and 13 in such a way that its speed of rotation causes withdrawal of material 14 from the supply roll I at a lesser linear speed than the circumferential speed of the outer surface of the bale 8, thereby to apply pre-tension to the material 14, prior to application to the bale.

After completion of the wrapping stage, the swing arm 15 pivots upwardly about pivot 16 to an extent such that feed mouth 5 is withdrawn to the inoperative position shown in Figure 2. This brings cutter device 4 into contact with the upper surface of the length of material 14 leading in a direction towards the bale 8, prior to spring loaded triggering of the cutter 4 in order to sever the film as will be apparent from Figures 3 and 4.

The cutter device 4 is spring loaded by the feeding mouth 5, and held in its loaded position by a catch/stopper 6. The stopper 6 is retracted when the feed mouth 5 has returned almost to its inoperative rest position, so as to urge a cutting knife at high speed through the material 14.

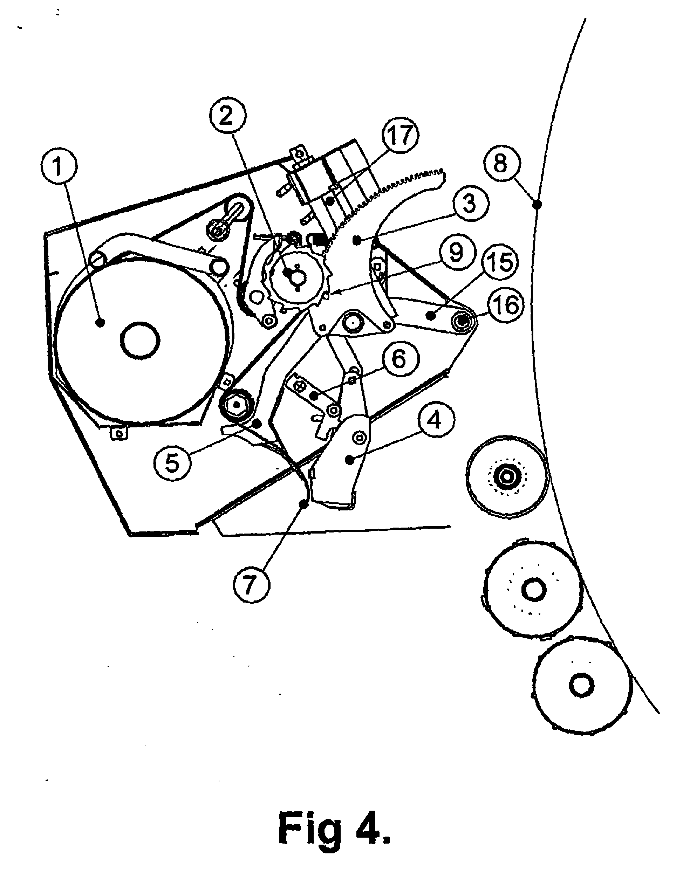

An arcuate gear 3 is mounted on the swing arm 15, and moves through an arc of engagement with a gear wheel on the pull off device 2, as shown in Figure 1, under the operation of a piston-cylinder device actuator 17 coupled with the swing arm 15. When the actuator 17 moves the swing arm 15 downwardly in an anti-clockwise direction about pivot 16, from the position shown in Figure 4, the feed mouth 5 returns to the operative position shown in Figure 1, in which it presents the previously severed leading end 7 again to the outer surface of a newly formed bale, so that a further cycle of operation can be initiated. During this movement of the swing arm 15, the arcuate gear 3 engages the gear wheel on the pull off device 2, which causes a length of material to be withdrawn from the supply roll 1 sufficient to allow the feed mouth 5 to move to the operative position shown in Figure 1. The apparatus 10 therefore has feed rollers which deliver material 14 e.g. netting to the feed mouth 5 as the latter moves the leading end 7 to engagement with the outer surface of the bale 8. As soon as the leading end 7 is engaged with the bale-forming elements e.g. rollers 12 and 13, the material 14 is then withdrawn from the supply roll 1 under the action of the rotation of the bale 8 and the rollers 12 and 13, but in this case the rollers forming part of the pull off device 2 now function as pre-stretching rollers, whose speed of rotation is restricted so that the material 14 withdrawn from the roll 1 must undergo some elastic deformation and thereby incorporate pre-tension, prior to application to the bale 8.

A freewheel is provided in the drive line between the pull-/stretch rollers of the pull-off device 2 and the bale forming elements (rollers 11, 12, 13), so as to achieve this required pre-tensioning of the material 14.

The driving of the pull-off/stretch rollers of pull-off device 2, under the action of arcuate gear 3, is also by means of a free wheel connection. The arcuate or partial gear wheel 3 is able to turn the pull-off/stretch rollers positively in order to withdraw material from the roll 1 and supply it to the feeding mouth 5, as the feed mouth 5 moves to the operative feeding position. However, this drive connection is lost due to the free wheel device, as soon as the material 14 has been grasped by the bale forming rollers 12 and 13 at least, which applies necessary withdrawal force to the material 14.

There is also provided a braking device, which prevents over-running of the rollers of the pull-off device 2, when the feed mouth 5 is moving back to its inoperative rest position. To latch the rollers against rotation, a stop 9 is provided on the arcuate gear 3, which engages with one of a number of circumferentially spaced pockets in the outer periphery of a corrugated disk, also coupled with the brake discs.

## Claims

1. An apparatus (10) for applying a covering material (14) to wrap at least part of the outer surface of an agricultural bale (8), said apparatus being mounted on a bale-forming machine and having a cycle of operation that includes:
<a> a feed step in which the leading end (7) of the covering material (14) is presented at a feed point that corresponds in use to the outer surface of the bale (8) when the bale has reached a required size;
<b> a wrapping step in which the covering material is wrapped at least once around the bale; and
<c> a severing step in which the supply of covering material from the apparatus to the bale is severed when required wrapping of the bale has been completed; in which the apparatus comprises:
a holder for a supply roll (1) of covering material, such as netting ;
means defining a guide path for the covering material (14) from the supply roll (1) to the feed point;
a pull-off device (2) arranged on said guide path;
a drive train coupled with the pull-off device (2); and
a feed mouth (5) also arranged on said guide path, downstream of the pull-off device (2), and operative to feed and guide the covering material (14) to the feed point during the feed step and to hold the cut end of the covering material after the severing step;
and further in which:
<A> the feed mouth (5) is moveable between an operative feeding position near to the feed point during which <a> the covering material is first presented by the feed mouth (5) to the feed point and <b> the covering layer is then withdrawn from the supply roll (1) to wrap the bale (8); and a withdrawn position which it takes up when wrapping has been completed so that the supply of covering material to the bale (8) can be severed; and
<B> the pull-off device (2) and the feed mouth (5) are relatively moveable during the operating cycle;
**characterised by** the apparatus being constructed and arranged such that:
during movement of the feed mouth from the withdrawn position to the operative feeding position, the pull-off device (2) is driven to withdraw a predetermined length of material from the supply roll (1), and
during the wrapping step the drive train is operative to drive the pull-off device (2) at a speed such that the linear speed of withdrawal of the covering material (14) from the supply roll (1) is less than the drive speed of driving elements (111,12,13) engageable with the bale (8) in the bale-forming machine, thereby applying pre-tension to the covering material (14) prior to application to the bale (8).

2. Apparatus according to claim 1, in which said predetermined length is substantially equal to the distance moved by the feed mouth (5) from the withdrawn position to the operative feeding position.

3. Apparatus according to anyone of the preceding claims, in which the pull-off device (2) is mounted on a fixed position on the frame of the apparatus,

4. Apparatus according to anyone of the preceding claims, in which the pull-off device (2) includes at least one roller.

5. Apparatus according to anyone of the preceding claims, in which the pull-off device (2) comprises a pair of rollers, spaced apart along the guide path.

6. Apparatus according to any one of the preceding claims, in which the drive train is driven at a lesser speed than the driving elements (11, 12, 13),

7. Apparatus according to anyone of the preceding claims, including a braking device operative to brake the operation of the pull-off device (2) when the feed mouth (5) returns to its withdrawn position,

8. Apparatus according to anyone of the preceding claims, including a spring-loaded cutter (4) operative to sever the covering layer when the feed mouth (5) has returned to its withdrawn position.

9. Apparatus according to anyone of the preceding claims, in which the feed mouth (5) is carried by a pivotally mounted swing arm (15).

10. Apparatus according to claim 9, in which a gear drive (3) is mounted on the swing arm (15) and is coupled drivingly with the pull-off device (2) so that the latter applies a withdrawal force to the covering material (14) when the feed mouth (5) is moved by the swing arm to the operative feeding position.

## Patentansprüche

1. Vorrichtung (10) zum Aufbringen eines Hüllmaterials (14) zum Umwickeln wenigstens eines Teils der Außenfläche eines landwirtschaftlichen Ballens (8), wobei die genannte Vorrichtung auf einer Ballenformmaschine montiert ist und einen Betriebszyklus hat, der Folgendes beinhaltet:
(a) einen Zufuhrschritt, bei dem das vordere Ende (7) des Hüllmaterials (14) zu einem Zufuhrpunkt gebracht wird, der beim Gebrauch der Außenfläche des Ballens (8) entspricht, wenn der Ballen eine benötigt Größe erreicht hat;
(b) einen Umwicklungsschritt, bei dem das Hüllmaterial wenigstens einmal um den Ballen gewickelt wird; und
(c) einen Abtrennschritt, bei dem die Zufuhr von Hüllmaterial von der Vorrichtung zum Ballen unterbrochen wird, wenn das erforderliche Umwickeln des Ballens abgeschlossen ist; wobei die Vorrichtung Folgendes umfasst:
einen Halter für eine Hüllmaterialvorratsrolle (1) wie z.B. ein Netz;
Mittel zum Definieren einer Führungsbahn für das Hüllmaterial (14) von der Vorratsrolle (1) zum Zufuhrpunkt;
eine auf der genannten Führungsbahn angeordnete Abziehvorrichtung (2);
einen mit der Abziehvorrichtung (2) gekoppelten Antriebsstrang; und
eine Zufuhrmündung (5), die ebenfalls auf der genannten Führungsbahn unterhalb der Abziehvorrichtung (2) angeordnet ist und die Aufgabe hat, das Hüllmaterial (14) während des Zufuhrschrittes zum Zufuhrpunkt zu führen und zu leiten und das abgeschnittene Ende des Hüllmaterials nach dem Abtrennschritt zu halten;
und bei dem ferner;
(A) die Zufuhrmündung (5) zwischen einer Betriebszufuhrposition in der Nähe des Zufuhrpunktes, wo (a) das Hüllmaterial dem Zufuhrpunkt von der Zufuhrmündung (5) zuerst präsentiert und (b) die Hülllage dann von der Vorratsrolle (1) zum Umwickeln des Ballens (8) abgezogen wird; und einer zurückgezogenen Position beweglich ist, die sie nach vollendetem Umwickeln einnimmt, so dass die Zufuhr von Hüllmaterial zum Ballen (8) unterbrochen werden kann; und
(B) die Abziehvorrichtung (2) und die Zufuhrmündung (5) während des Betriebszyklus relativ beweglich sind;
**dadurch gekennzeichnet, dass** die Vorrichtung so konstruiert und angeordnet ist, dass:
während der Bewegung der Zufuhrmündung von der zurückgezogenen Position in die Betriebszufuhrposition die Abziehvorrichtung (2) angetrieben wird, um ein vorbestimmtes Stück Material von der Vorratsrolle (1) abzuziehen, und
während des Hüllschrittes der Antriebsstrang die Abziehvorrichrung (2) mit einer solchen Geschwindigkeit antreibt, dass die lineare Abzugsgeschwindigkeit des Hüllmaterials (14) von der Vorratsrolle (1) geringer ist als die Antriebsgeschwindigkeit von Antriebselementen (11, 12, 13), die mit dem Ballen (8) in der Ballenformmaschine in Eingriff gebracht werden können, um **dadurch** eine Vorspannung auf das Hüllmaterial (14) vor dem Aufbringen auf den Ballen (8) aufzubringen.

2. Vorrichtung nach Anspruch 1, wobei das genannte vorbestimmte Stück von der Zufuhrmündung (5) im Wesentlichen um die gleiche Distanz von der zurückgezogenen Position in die Betriebszufuhrposition bewegt wird.

3. Vorrichtung nach einem der vorherigen Ansprüche, wobei die Abziehvorrichtung (2) an einer festen Position am Rahmen der Vorrichtung montiert ist.

4. Vorrichtung nach einem der vorherigen Ansprüche, wobei die Abziehvorrichtung (2) wenigstens eine Rolle umfasst.

5. Vorrichtung nach einem der vorherigen Ansprüche, wobei die Abziehvorrichtung (2) ein Paar Rollen umfasst, die entlang der Führungsbahn voneinander beabstandet sind.

6. Vorrichtung nach einem der vorherigen Ansprüche, wobei der Antriebsstrang mit einer geringeren Geschwindigkeit angetrieben wird als die Antriebselemente (11, 12, 13).

7. Vorrichtung nach einem der vorherigen Ansprüche mit einer Bremsvorrichtung zum Abbremsen des Betriebs der Abziehvorrichtung (2), wenn die Zufuhrmündung (5) in ihre zurückgezogene Position zurückkehrt.

8. Vorrichtung nach einem der vorherigen Ansprüche mit einem federgespannten Cutter (4) zum Abtrennen der Hülllage, wenn die Zufuhrmündung (5) in ihre zurückgezogene Position zurückgekehrt ist.

9. Vorrichtung nach einem der vorherigen Ansprüche, wobei die Zufuhrmündung (5) von einem schwenkbar montierten Schwingarm (15) getragen wird.

10. Vorrichtung nach Anspruch 9, wobei ein Zahnradgetriebe (3) an dem Schwingarm (15) montiert und antriebsmäßig mit der Abziehvorrichtung (2) gekoppelt ist, so dass Letztere eine Abzugskraft auf das Hüllmaterial (14) aufbringt, wenn die Zufuhrmündung (5) von dem Schwingarm in die Betriebszufuhrposition bewegt wird.

## Revendications

1. Appareil (10) pour appliquer un matériau de couverture (14) pour emballer au moins une partie de la surface externe d'une balle agricole (8), ledit appareil étant monté sur une machine de formation de balles et ayant un cycle de fonctionnement qui inclut :
<a> une étape d'alimentation dans laquelle l'extrémité avant (7) du matériau de couverture (14) est présentée à un point d'alimentation qui correspond, lors de l'utilisation, à la surface externe de la balle (8) lorsque la balle a atteint une taille requise ;
<b> une étape d'emballage dans laquelle le matériau de couverture est emballé au moins une fois autour de la balle ; et
<c> une étape de coupure dans laquelle l'approvisionnement en matériau de couverture de l'appareil vers la balle est coupé lorsque l'emballage requis de la balle est terminé ; dans lequel l'appareil comprend :
un support pour un rouleau d'approvisionnement (1) en matériau de couverture, comme un grillage ;
des moyens définissant un chemin de guidage pour le matériau de couverture (14) du rouleau d'approvisionnement (1) au point d'alimentation ;
un dispositif de traction (2) disposé sur ledit chemin de guidage ;
une transmission couplée au dispositif de traction (2) ; et
une bouche d'alimentation (5) également disposée sur ledit chemin de guidage, en aval du dispositif de traction (2), et opérationnelle pour alimenter et guider le matériau de couverture (14) vers le point d'alimentation pendant l'étape d'alimentation et pour retenir l'extrémité coupée du matériau de couverture après l'étape de coupure ;
et en outre dans lequel :
<A> la bouche d'alimentation (5) est mobile entre une position d'alimentation opérationnelle près du point d'alimentation dans laquelle <a> le matériau de couverture est d'abord présenté par la bouche d'alimentation (5) au point d'alimentation et <b> la couche de couverture est ensuite retirée du rouleau d'approvisionnement (1) pour emballer la balle (8) ; et une position en retrait qu'elle adopte lorsque l'emballage est terminé de sorte que l'approvisionnement en matériau de couverture vers la balle (8) puisse être coupé ; et
<B> le dispositif de traction (2) et la bouche d'alimentation (5) sont relativement mobiles pendant le cycle d'exploitation ;
**caractérisé par le fait que** l'appareil est construit et disposé de telle sorte que :
pendant le mouvement de la bouche d'alimentation de la position en retrait à la position d'alimentation opérationnelle, le dispositif de traction (2) est entraîné pour retirer une longueur prédéterminée de matériau du rouleau d'approvisionnement (1), et
pendant l'étape d'emballage, la transmission est opérationnelle pour entraîner le dispositif de traction (2) à une vitesse telle que la vitesse linéaire de retrait du matériau de couverture (14) du rouleau d'approvisionnement (1) est inférieure à la vitesse d'entraînement d'éléments d'entraînement (11,12,13) pouvant être mis en prise avec la balle (8) dans la machine de formation de balles, appliquant ainsi une pré-tension sur le matériau de couverture (14) avant l'application sur la balle (8).

2. Appareil selon la revendication 1, dans lequel ladite longueur prédéterminée est substantiellement égale à la distance parcourue par la bouche d'alimentation (5) de la position en retrait à la position d'alimentation opérationnelle.

3. Appareil selon une quelconque des revendications précédentes, dans lequel le dispositif de traction (2) est monté sur une position fixe sur le cadre de l'appareil.

4. Appareil selon une quelconque des revendications précédentes, dans lequel le dispositif de traction (2) inclut au moins un rouleau.

5. Appareil selon une quelconque des revendications précédentes, dans lequel le dispositif de traction (2) comprend une paire de rouleaux, espacés le long du chemin de guidage.

6. Appareil selon une quelconque des revendications précédentes, dans lequel la transmission est entraînée à une vitesse moindre que les éléments d'entraînement (11,12,13).

7. Appareil selon une quelconque des revendications précédentes, incluant un dispositif de freinage opérationnel pour freiner le fonctionnement du dispositif de traction (2) lorsque la bouche d'alimentation (5) revient à sa position en retrait.

8. Appareil selon une quelconque des revendications précédentes, incluant un couteau à ressort (4) opérationnel pour couper la couche de couverture lorsque la bouche d'alimentation (5) est revenue à sa position en retrait.

9. Appareil selon une quelconque des revendications précédentes, dans lequel la bouche d'alimentation (5) est portée par un bras oscillant monté de manière rotative (15).

10. Appareil selon la revendication 9, dans lequel un entraînement par engrenage (3) est monté sur le bras oscillant (15) et est couplé par entraînement au dispositif de traction (2), de sorte que ce dernier applique une force de retrait sur le matériau de couverture (14) lorsque la bouche d'alimentation (5) est déplacée par le bras oscillant vers la position d'alimentation opérationnelle.
